# EUROPÄISCHE PATENTSCHRIFT

(11) **EP 0 390 063 B1**
(45) Veröffentlichungstag und Bekanntmachung des Hinweises auf die Patenterteilung: **04.01.1995**
(21) Anmeldenummer: 90105788.5
(22) Anmeldetag: 27.03.1990
(51) Int. Cl.: B60S 1/08

(54) **Vorrichtung zur Steuerung eines Scheibenwischers in Abhängigkeit von der Regenintensität**
Means for controlling a windscreen wiper according to the rain intensity
Installation de commande d'un essuie-glace en fonction de l'intensité de la pluie

(30) Priorität: 29.03.1989 DE 3910116
(43) Veröffentlichungstag der Anmeldung: 03.10.1990
(73) Patentinhaber: Delphi Automotive Systems Deutschland GmbH, D-42369 Wuppertal (DE)
(72) Erfinder: Woeste, Guido, Dipl.-Ing., D-5830 Schwelm (DE)
(74) Vertreter: Denton, Michael John

(56) Entgegenhaltungen:
- EP-A- 0 102 622
- EP-A- 0 115 338
- PATENT ABSTRACTS OF JAPAN vol. 10, no. 301 (M-525)(2357) 14. Oktober 1986 & JP-A-61 115 754
- PATENT ABSTRACTS OF JAPAN vol. 7, no. 217 (M-245)(1362) 27. September 1983 & JP-AQ-58 112 852

## Beschreibung

Die Erfindung bezieht sich auf einen Regensensor der in der Präambel des Anspruches 1 angegebenen Art.

Bei einer bekannten Vorrichtung (EP-OS 0 115 338) ist ein piezo-elektrischer Geber vor der Scheibe des Kraftfahrzeugs auf der Motorhaube angeordnet. Er ist vielfachen Störeinflüssen ausgesetzt: Der einzelne Sensor verarbeitet die Meßsignale analog und erfaßt dabei auch Störsignale. Dies gilt insbesondere dann, wenn man ihn besonders empfindlich auf geringe Regenintensität ansprechbar machen will.

Störungen ergeben sich zunächst aufgrund mechanischer Einwirkungen von innen und außen. So kann ein piezo-elektrischer Geber nicht unterscheiden, ob seine Beanspruchungen durch Vibrationen des Kraftfahrzeugs oder durch auftreffende Regentropfen zustande kommen. Störungserzeugende Erschütterungen ergeben sich beim Fahren des Kraftfahrzeugs durch Unebenheiten in der Fahrbahn. Entsprechend wirken Schwingungen,die durch den Motorlauf, durch Bewegung der Insassen oder durch Türenschlagen entstehen. Bei empfindlichen Gebern, die wünschenswert sind, macht sich bereits ein innerer oder äußerer Schall störend bemerkbar. Nachteilig wirken sich aber auch elektrische Einflüsse aus, die intern, vom Bordnetz ausgehen oder von außen, z.B. durch das Wetter, induziert werden. Zu nennen ist hier die Zündung des Motors, Induktionen der Lichtmaschine oder von außerhalb des Fahrzeugs liegenden Verbrauchern. All dies hatte zur Folge, daß sich piezo-elektrische Geber für die Steuerung von solchen Vorrichtungen nicht durchsetzen konnten.

Aus der japanischen Patentanmeldung JP-A-61115754 ist schon eine Steuervorrichtung gemäß der Präambel des Anspruchs 1 bekannt, bei der zwei Piezoelemente benutzt werden, wobei die Ausgangsspannung des einen Elementes invertiert und der Ausgangsspannung des anderen Elementes überlagert wird. Das überlagerte Signal wird weiterverarbeitet und als Wischersteuersignal ausgegeben.

Der Erfindung liegt die Aufgabe zugrunde, eine Vorrichtung zur Steuerung der Wischarbeit eines Scheibenwischers der in der Präambel des Anspruches 1 genannten Art derart weiterzuentwickeln, daß deren piezo-elektrischer Geber zwar empfindlich reagiert, jedoch zuverlässig nur auf die Regenintensität anspricht, die genannten Störungen aber ignoriert und dabei preiswert ist und sich durch eine einfache Bedienung auszeichnet.

Dies wird erfindungsgemäß durch die im Kennzeichen des Anspruches 1 angeführten Maßnahmen erreicht, denen folgende Bedeutung zukommt:
Man geht von zwei oder mehr voneinander unabhängigen Piezoelementen aus, in welche der Piezokristall gegliedert ist und wertet die anfallende Meßsignale in getrennten Signalwegen aus. Abschließend erfolgt aber eine vergleichende Signalauswertung, mit welcher Störungen erkannt und eliminiert werden. Geht man z. B. von zwei Elementen aus, die zusammen den Regensensor bilden, so werden Störungen im wesentlichen gleichzeitig an beiden Elementen anfallen, können so erkannt und daher bei der Auswertung unberücksichtigt gelassen werden. Beim Auftreffen eines Regentropfens hingegen werden die beidseitig anfallenden Signale sich unterscheiden. Die Signalunterschiede können daher ausgewertet werden und sind ein Maß für die Anzahl und die Größe des in dem beobachteten Zeitraum auf dieses Element des Piezokristalls auftreffenden Regentropfens. Dies kann als Maß zur Steuerung des Wischerantriebs genutzt werden. Das Meßprinzip beruht darauf, die von den Regentropfen ausgehenden mechanischen Spannungen des davon getroffenen Piezoelements in eine elektrische Ladung umzuwandeln, was eine bequeme elektronische Auswertung ermöglicht. Die Meßmethode ist auf der mechanischen Wirkung der Regentropfen selbst aufgebaut und kann ihre Größe und ihre Anzahl pro Zeiteinheit erfassen und damit ein Maß für die Regenintensität sein, welche die Sicht durch die Scheibe beeinträchtigt. Die Erfindung ist nicht von veränderlichen Parametern, wie z. B. der Leitfähigkeit abhängig. Der Wischer braucht nicht über den Sensor streichen, weshalb von da her auch keine Beschädigungen zu befürchten sind.

Weil bei der Vergleichsmessung die bei allen Piezoelementen nach der Erfindung anfallenden Signale unterdrückt werden, können weder mechanische Schwingungen durch Störeffekte, noch Schallschwingungen aus der Umgebung, noch elektrische Störsignale das erfindungsgemäße Ergebnis verfälschen.

Bedeutungsvoll ist es, die beiden Piezoelemente durch die beiden Hälften eines gemeinsam hergestellten Piezokristalls zu bilden. Man wird bestrebt sein, diese beiden Elemente möglichst flächengleich zu gestalten, weil dann bei der Auswertung der Signale keine aus der unterschiedlichen Fertigung sich ergebenden Abweichungen zwischen den beiden Elementen berücksichtigt zu werden brauchen. Andernfalls müßte man nämlich die beiden Elemente vorher in einem Eichvorgang in ihren Wirkungen aufeinander abstimmen, was umständlicher ist.

In manchen Fällen ist es möglich nur einen der beiden Piezoelemente der Witterung auszusetzen, während das andere Piezoelement als Vergleichsobjekt fungiert, um Störungen festzustellen. Günstiger ist es aber, alle Elemente gleichzeitig der Witterung auszusetzen, weil damit von vorneherein einheitlichere Verhältnisse vorliegen, die gemeinsam auftretende Störungen besser erkennen lassen.

Beachtenswert ist, auch die Fahrzeuggeschwindigkeit mit zur Steuerung der Wischerarbeit heranzuziehen. Mit steigender Fahrzeuggeschwindigkeit treffen nämlich nicht nur entsprechend häufiger die Tropfen auf das dann zur Auswertung benutzte Piezoelement, sondern die Tropfen treffen auch mit einem entsprechend größeren Impuls auf und täuschen durch den dadurch ausgelösten höheren Kraftstoß eine übertriebene Größe des Regentropfens vor. Aus der bei höherer Geschwindigkeit anfallenden Beanspruchung würde man ohne Berücksichtigung der Fahrzeuggeschwindigkeit bei der Signalauswertung auf eine zu hohe Regenintensität schließen. Die bei höherer Geschwindigkeit sich ergebende größere Härte der Aufschläge muß rechnerisch kompensiert werden.

Durch auftreffende Staubkörner bei trockenem Wetter könnte irrtümlich auf einen Regeneinfall geschlossen werden, wenn nicht die erfindungsgemäße Kombination mit einem Feuchtesensor nach Anspruch 4 vorliegen würde. Günstige Verhältnisse für die Messung ergeben sich durch die Maßnahmen nach Anspruch 5 oder 6, wobei es empfehlenswert ist, eine der Scheibe angepaßte Neigungslage nach Anspruch 7 dabei zu berücksichtigen, um bereits bei der Messung die zur Scheibe analogen Verhältnisse zu reproduzieren.

Vorteilhaft ist es, den Aufbau gemäß den weiteren Unteransprüchen zu wählen, weil damit die Herstellung, Montage und Pflege der Vorrichtung nach der Erfindung besonders einfach sind. Weitere Maßnahmen und Vorteile der Erfindung ergeben sich aus den Zeichnungen und der nachfolgenden Beschreibung. Die Erfindung richtet sich dabei auf alle daraus entnehmbaren neuen Merkmale und Merkmalskombinationen, auch wenn diese nicht ausdrücklich in den Ansprüchen angeführt sein sollten. In den Zeichnungen ist die Erfindung in einem Ausführungsbeispiel dargestellt. Es zeigen:
- Fig. 1 und 2: die Draufsicht und die Längsschnittansicht durch eine erste Ausführungsform der erfindungsgemäßen Vorrichtung,
- Fig. 3: in halbschematischer Darstellung den Aufbau des zugehörigen elektronischen Auswerters,
- Fig. 4: eine detailliertere Darstellung des schaltungstechnischen Aufbaus dieses Auswerters und
- Fig. 5 bis 8: die an verschiedenen, in Fig. 4 näher bezeichneten Stellen des Auswerters anfallenden Signale und ihre Auswertung.

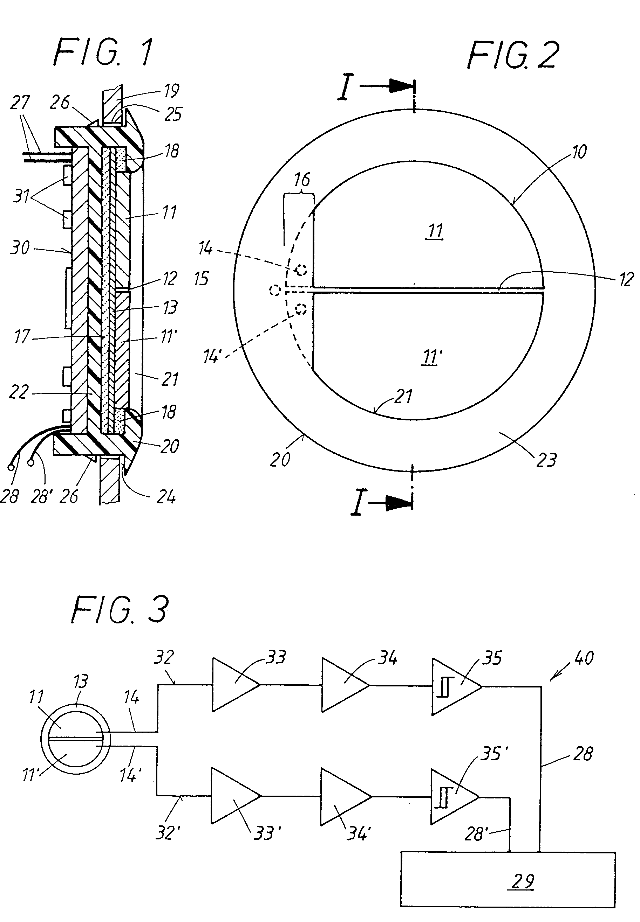

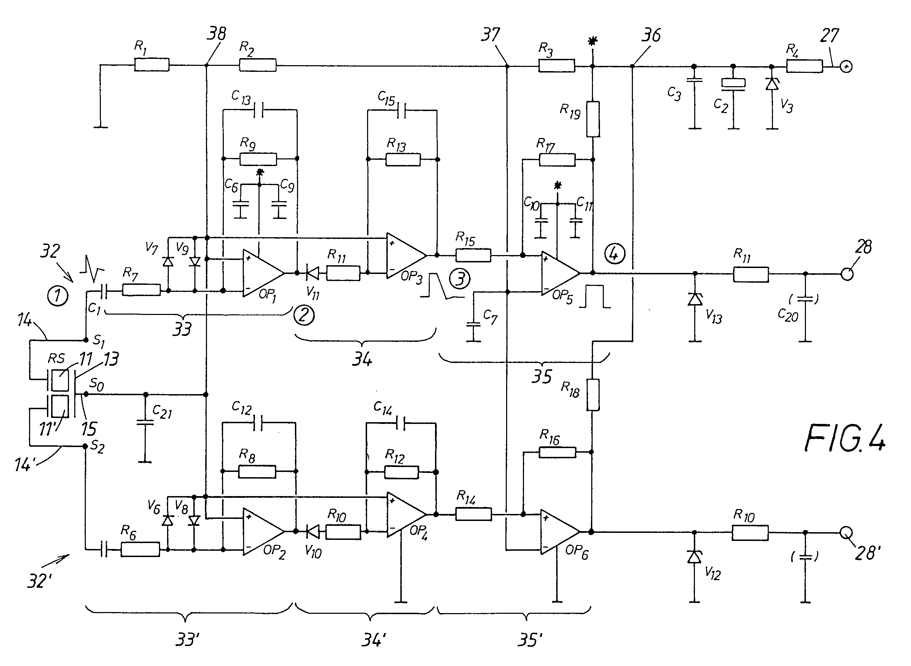

Man geht von einer hier einen kreisförmigen Umriß aufweisenden Platte 10 eines Piezokristalls aus, die in ihrer Längsmitte geteilt wird und daher zwei spiegelbildlich gleiche Hälften 11, 11' bildet, die voneinander elektrisch getrennt sind und nachfolgend kurz "Piezoelemente" 11, 11' bezeichnet werden. Es versteht sich, daß man auch eine Teilung des Piezokristalls 10 in mehr als zwei Bestandteile 11, 11' veranlassen könnte, was eine entsprechende Vervielfachung der nachfolgend erwähnten Bauteile mit sich bringt. Alternativ wäre es auch möglich, Piezoelemente 11, 11' zu verwenden, die grundsätzlich unabhängig voneinander hergestellt worden sind und deren physikalische und elektrische Eigenschaften im nachhinein in der noch zu beschreibenden Schaltung aneinander angeglichen werden oder später im Mikroprozessor rechnerisch erfaßt werden. Die beiden Piezoelemente 11, 11' sind durch eine Fuge 12 voneinander elektrisch getrennt auf einer metallischen Gundplatte 13 befestigt, z. B. durch Kleben. Die beiden Elemente 11, 11' werden an ihrem einen Endbereich mit einer schließlich im Endzustand verdeckten Kontaktierung 14, 14'versehen. Die entsprechenden Leiter 14, 14' sind in den Fig. 3 und 4 eingezeichnet. Eine dritte Kontaktierung 15 ergibt sich an der gemeinsamen Grundplatte 13, was in Fig. 4 eingezeichnet ist. Das so vorbehandelte Vorprodukt 11, 11', 13 wird zusammen mit seinen elektrischen Anschlußleitungen 14, 14', 15 tauchlackiert, um eine gute elektrische Isolation, aber auch eine mechanische Festigkeit zu erreichen. Dieses Vorprodukt wird dann in ein hier einteilig ausgebildetes Gehäuse 20 mit folgendem Aussehen montiert:

Das einstückige Gehäuse 20 besteht aus Kunststoff und umfaßt eine Gehäuseöffnung 21 mit dem aus Fig. 2 ersichtlichen Profil. Dieses Profil ist so ausgebildet, daß der mit den Kontaktierungen 14, 14', 15 ausgerüstete Sektor 16 gemäß Fig. 2 abgedeckt ist. Das Gehäuse 20 besitzt einen Boden 22, auf welchem eine Schicht aus dämpfendem Material 17 geklebt ist. Die Öffnung 21 ist von einem ringförmigen Rahmen 23 umschlossen, der die tauchlackierten Piezoelemente 11, 11' umgrenzt. Wie aus Fig. 1 ersichtlich, ist die Grundplatte 13 mit einem demgegenüber etwas größeren Durchmesser versehen, der den Rahmen 23 hintergreift. Im Umfangsbereich um die Piezoelemente 11, 11' ist auch auf der Oberseite der Grundplatte 13 Dämpfungsmaterial 18 angeordnet.

Auf der Rückseite des Gehäusebodens 22 wird eine Leiterplatte 30 montiert, welche eine Anzahl noch näher zu beschreibender elektronischer Bauteile 31 trägt, welche mittels Leiterbahnen untereinander in der aus Fig. 3 und insbesondere Fig. 4 ersichtlichen Weise miteinander verbunden sind. Die Leiterplatte 30 ist damit integrierender Bestandteil des Gehäuses 20, welches in der beschriebenen Weise bereits die Piezoelemente 11, 11' beinhaltet. Dieses Gebilde kann nun als ein Bauteil montiert werden. Dies geschieht vorzugsweise im Bereich eines Außenspiegels bei einem Kraftfahrzeug, von dem in Fig. 1 lediglich eine Rückwand 19 gezeigt ist, worin ein dem Querschnitt des Gehäuses 20 entsprechender Durchbruch 25 vorgesehen ist. Der Rahmen 23 besitzt einen das Gehäuse umfangsmäßig überragenden Flansch 24, der im Montagefall im Randbereich um den Durchbruch 25 an der Spiegelgehäuserückwand 19 zur Anlage kommt. Gleichzeitig besitzt das Gehäuse radiale Nocken 26, die im Montagefall auf der Innenseite dieser Spiegelgehäuserückwand 19 schnappen und damit für die Festlegung des Gehäuses 20 mit seinen Bestandteilen an dieser Stelle des Fahrzeugs sorgen. Die Leiterplatte 30 ist mit Stromversorgungsleitungen 27 versehen, die mit der Stromversorgung des Kraftfahrzeugs unmittelbar oder mittelbar verbunden sind. Eine mittelbare Verbindung kann z. B. durch einen vorgeschalteten Feuchtesensor erfolgen, der den äußeren Witterungseinflüssen des Fahrzeugs ebenfalls ausgesetzt ist und die erfindungsgemäße Vorrichtung nur dann einschaltet, wenn Feuchtigkeit vorliegt. Von der Leiterplatte 30 gehen noch Verbindungsleitungen 28, 28' ab, welche die in diesem Bereich des Auswerters erfolgte getrennte Signalaufbereitung zu einem schematisch in Fig. 3 angedeuteten gemeinsamen Prozessor 29 führen. Die Leiterplatte 30 mit ihren Bauelementen 31 und der Prozessor stellen den elektronischen Auswerter 40 bei der Erfindung dar. Die Software des Prozessors 29 wird abschließend näher beschrieben.

Wie aus Fig. 3 ersichtlich, umfaßt der Auswerter 40 hinter seinen Anschlüssen 14, 14' an den beiden Piezoelementen 11, 11' zwei identische Signalwege 32, 32', die einen als Hochpaß fungierenden Ladungsverstärker 33 bzw. 33' aufweisen, dem dann ein als Gleichrichter wirksamer, invertierender Verstärker 34 bzw. 34' sich anschließt und dem jeweils ein Schmitt-Trigger 35 bzw. 35' nachgeschaltet ist. Das Blockschaltbild von Fig. 3 ist in Fig. 4 in seinem näheren Aufbau verdeutlicht, woraus sich folgende Wirkungsweise ergibt:
Die Vesorgungsleitung 27 von Fig. 4 erzeugt mit den Widerständen R1, R2, R3 und R4 einen Spannungsteiler, der so bemessen ist, daß an der Leitungsstelle 36 die volle Spannung, an der Leitungsstelle 37 die Dreiviertelspannung und an der Leitungsstelle 38 nur die halbe Versorgungsspannung anstehen. Weil beide Signalwege 32, 32' des Auswerters einen übereinstimmenden Aufbau aufweisen, genügt es, lediglich einen dieser beiden Wege 32 zu beschreiben, was in Fig. 4 für das Piezoelement 11 ausgeführt wird. Die entsprechende Beschreibung gilt dann sinngemäß auch für den zum anderen Piezoelement 11' gehörenden Signalweg 32'.

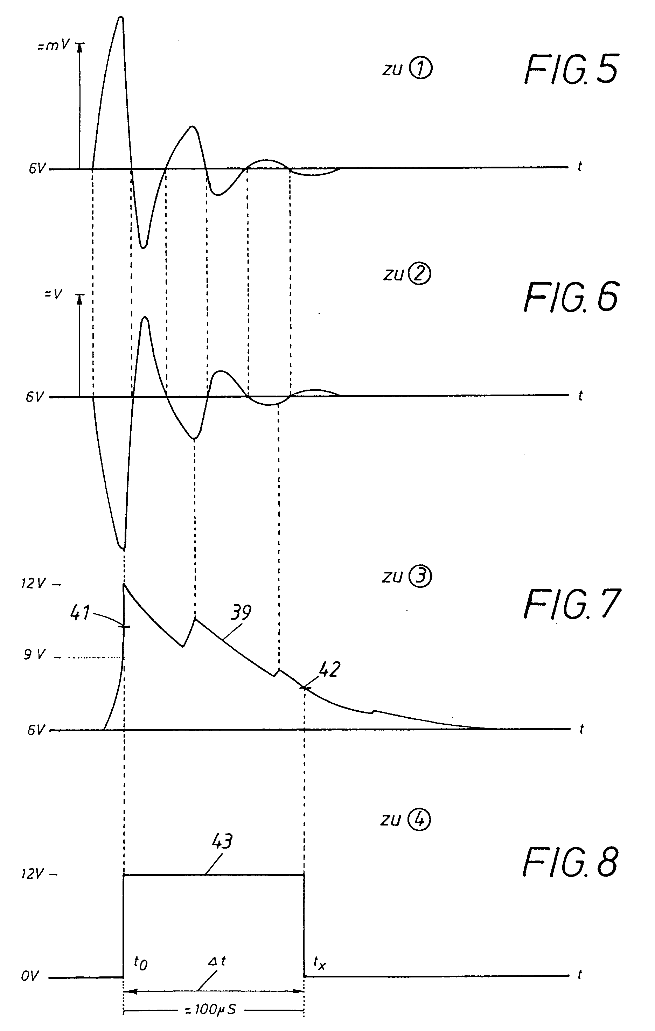

An der Signalleitung 14 des Piezoelements 11 fällt beim Auftreffen eines Regentropfens an der in Fig. 4 mit (1) bezeichneten Stelle das aus Fig. 5 ersichtliche Signal an. In Fig. 5 ist der zeitliche Ablauf des Signals veranschaulicht, dessen Ordinate die Meßspannung in wenigen Milli-Volt angibt. Die Signalform ist eine gedämpfte Schwingung.

Im Signalweg 32 erfolgt dann ein Kondensator C1, der als Hochpaß fungiert und daher dieses Signal zwar durchläßt, aber niederfrequente Störungen bereits nicht mehr passieren läßt. Dann folgt der Ladungsverstärker 33, dessen beide Widerstände R7, R9 den Verstärkungsfaktor bestimmen, der in der Größenordnung von 1000 liegt. Dazu gehört der mit OP1 bezeichnete Operationsverstärker, dem Schutzdioden V7, V9 vorgeschaltet sind, die eine Überspannung beseitigen sollen. Die Kondensatoren C6, C9 dienen zum Sieben unerwünschter Hochfrequenz und zur Spannungsstabilisierung bzw. Glättung. An der in Fig. 4 mit (2) bezeichneten Stelle entsteht das in Fig. 6 ersichtliche, verstärkte und invertierte Signal. Ausweislich der Ordinate von Fig. 6 liegt das so aufbereitete Signal in der Größenordnung von einem Volt. Der Kondensator C13 hat eine sehr kleine Kapazität in der Größenordnung von pF.

Dann folgt der vorbeschriebene Gleichrichter 34, wofür die Diode V11 maßgeblich ist. Der dortige Operationsverstärker OP3 wird in seiner Verstärkung durch die Widerstände R11, R13 eingestellt und wirkt mit dem Kondensator C15 als Tiefpaß. An der dortigen mit (3) gekennzeichneten Stelle der Schaltung erscheint folglich das gleichgerichtete, aus Fig. 7 ersichtliche Signal und gelangt an den einen Eingang eines weiteren Operationsverstärkers OP5, der Bestandteil des erwähnten Triggers 35 ist. Der andere Eingang dieses Operationsverstärkers OP5 ist über den Kondensator C7 an die Versorgungsspannung angeschlossen, der ähnlich, wie der analoge Kondensator C21 bei der Anschlußstelle der Kontaktleitung 15 für eine Glättung der Spannung sorgt. Auch im Trigger 35 sind wieder zur Schaltpunkteinstellung die Widerstände R15, R17 maßgebend. Die dortigen Kondensatoren C10, C11 dienen, wie schon in der ersten Verstärkerstufe 33 zum Sieben der Hochfrequenz und zur Spannungsstabilisierung bzw. Glättung.

In der Vergleichsspannung am Operationsverstärker OP5 sind ein oberer und ein unterer Grenzwert 42, 41 gemäß Fig. 7 maßgeblich für das dort an der Stelle (4) anfallende Ausgangssignal, dessen Aussehen in Fig. 8 näher verdeutlicht ist. Durch gestrichelte Linien zwischen Fig. 7 und Fig. 8, die im Zusammenhang mit den in den vorausgehenden Signalen gemäß Fig. 5 und 6 stehenden Meßergebnissen stehen, ergibt sich folgender Zusammenhang:
Das Ausgangssignal 43 gemäß Fig. 8 ist ein einfaches Rechtecksignal mit von dem vorausgehenden Eingangssignal 39 gemäß Fig. 7 genau vorbestimmten Signallänge Δt. Das Ausgangssignal 43 beginnt in jenem Zeitpunkt tO, wo das Eingangssignal 39 in seinem Verlauf den oberen Grenzwert 41 zu übersteigen beginnt. Das Ausgangssignal 43 endet dann, gemäß Fig. 8, bei tx, wenn das Eingangssignal 39 in seinem Verlauf die untere Grenzspannung 42 zu unterschreiten beginnt. Die Erfindung hat erkannt, daß der dazwischenliegende Signalverlauf des Eingangssignals 39 unberücksichtigt bleiben kann, weil sich darin nur der Dämpfungsverlauf des auslösenden Meßimpulses gemäß Fig. 5 widerspiegelt. Man kommt so zu einem sehr einfachen und damit leicht auswertbaren Ausgangssignal 43, dessen Signallänge Δt ein Maß für die Größe des aufgefallenen Tropfens ist, also die Menge der Flüssigkeit pro Zeiteinheit widerspiegelt, die auf das Piezoelement 11 bzw. 11' und damit in entsprechender Weise auf die zu wischende Scheibe gelangt ist.

Diese Ausgangssignale 43 an der Stelle (4) des Leitungswegs 32 bzw. 32' gelangen an die beiden in Fig. 4 angedeuteten Ausgänge 28, 28', die nun zu einem Komparator in dem erwähnten nachgeschalteten Prozessor 29 führen. Im Endbereich der Signalwege 32 bzw. 32' ist noch eine Schutzdiode V13 bzw. V12 geschaltet, von welcher die entsprechende Schutzfunktion, wie einer in der Versorgungsleitung 27 geschalteten Diode V3 ausgeht. In der Versorgungsspannung 27 befindet sich auch noch ein gepolter Kondensator C2 als Energiespeicher und ein Kondensator C3 zum Sieben von Hochfrequenzen. Am Ende der beiden Signalwege 32, 32' kann dann auch ein weiterer Kondensator C20 geschaltet sein, der die Kanten des in Fig. 8 beschriebenen Ausgangssignals 43 rundet und für den nachgeschalteten Prozessor 29 tauglicher machen kann.

Der Prozessor 29 umfaßt zunächst einen Komparator, der die jeweiligen Ausgangssignale 43, die über die beiden Signalwege 32, 32' von den beiden getrennten Piezoelementen 11, 11' ausgehen, miteinander vergleicht. Sind diese innerhalb einer aus praktischen Erfahrungen ermittelten Toleranz in ihrer Signallänge Δt gleich, so wertet der Prozessor 29 diese als Störungen und ignoriert sie in der weiteren Auswertung. Er berücksichtigt grundsätzlich nur an einem der beiden Elemente 11 oder 11' anfallenden und gemäß 43 aufbereiteten Signale bzw. die bei Überschneidungen zweier Signale sich ergebende Signaldifferenz. Diese wertet er als von einem Regentropfen ausgehende Reaktion des zugehörigen Piezoelements. Der Prozessor 29 summiert die Ausgangssignale auf, bis sie einen bestimmten, voreinstellbaren Wert überschreiten. Ist dieser Wert erreicht, so übt der Prozessor 29 einen Steuerimpuls auf den Wischerantrieb und läßt diesen einen Wischzyklus ausführen. Die Voreinstellung ist nämlich nach einem Erfahrungswert so gewählt, daß nach einer solchen Verschmutzung der Scheibe durch Regentropfen der Bedarf nach einer Scheibenreinigung besteht. Man wird dabei zweckmäßigerweise einen an der Armatur des Fahrzeugs vorgesehenen Einstellknopf verwenden, mit dem der Fahrzeugführer, je nach persönlichem Bedarf, diesen Schwellenwert zur Ausführung einer Wischbewegung einstellen kann.

Wie bereits eingangs erwähnt wurde, liefert die Fahrzeuggeschwindigkeit durch den Aufprall der Regentropfen einen stärkeren Einfluß, als von der pro Zeiteinheit dabei anfallenden Regenmenge an sich entspricht. Die vom Tachometer des Fahrzeugs ausgehende Information über die Geschwindigkeit des Fahrzeugs wird daher zweckmäßigerweise auch dem Prozessor 29 zugeführt und dort rechnerisch erfaßt. Dies kann z. B. dadurch geschehen, daß die Geschwindigkeit die voreingestellte Anzahl der von Ausgangssignal 43 bewirkten Zähleinheiten erhöht und dadurch den zu stark in der Rechnung eingehenden Einfluß der Geschwindigkeit entsprechend kompensiert.

Ein solcher Prozessor 29 kann schließlich auch noch in folgender Weise betrieben werden, was sich in der Praxis als eine besonders gute Eliminierung von Störeinflüssen erwiesen hat. In einem Störfall, wo im wesentlichen übereinstimmende Störsignale von beiden Piezoelementen 11, 11' ausgehen, stellt der Prozessor 29 zunächst fest, welches der beiden Elemente 11, 11' das empfindlichere ist. Diese Feststellung kann auch als Ergebnis einer längeren Beobachtung erfolgen. Dieses Ergebnis merkt sich der Prozessor 29 für die dann folgende eventuelle Meßphase und berücksichtigt nur das von dem unempfindlicheren Piezoelement 11 bzw. 11' ausgehende Signal 43, während er das vom empfindlicheren Element 11' bzw 11 ausgehende unberücksichtigt läßt. Der Prozessor 29 kann nämlich in einem solchen Fall davon ausgehen, daß das jeweils unempfindlichere Element in besserer Weise als das andere die von einem Regentropfen bewirkten Verhältnisse wiedergibt.Im Laufe des bestimmungengemäßen Gebrauchs können sich auch die Verhältnisse zwischen dem empfindlicheren und unempfindlicheren Piezoelement 11, 11' verändern, weshalb der Prozessor diese Verhältnisse auch während der künftigen Betriebsdauer berücksichtigen und entsprechend ändern kann.

### Bezugszeichenliste:

- 10: Piezokristall
- 11, 11': Hälfte von 10, Piezoelement
- 12: Fuge zwischen 11, 11'
- 13: Grundplatte
- 14, 14': Kontaktierung von 11, 11', Signalleitung
- 15: Kontaktierung von 13, Signalleitung
- 16: Sektor von 11, 11'
- 17: Dämpfungsmaterial
- 18: Dämpfungsmaterial
- 19: Rückwand eines Spiegels
- 20: Gehäuse
- 21: Gehäuseöffnung
- 22: Gehäuseboden
- 23: Rahmen von 21
- 24: Flanschfläche an 23
- 25: Durchbruch in 19
- 26: Nocken an 20
- 27: Stromversorgung von 30
- 28, 28': Verbindungsleitung zu 29
- 29: Prozessor
- 30: Leiterplatte
- 31: elektronisches Bauteil
- 32, 32': Signalweg von 40
- 33, 33': Ladungsverstärker, Hochpaß
- 34, 34': Verstärker, Gleichrichter
- 35, 35': Schmitt-Trigger
- 36: Leiterstelle (volle Spannung)
- 37: Leiterstelle (Dreiviertelspannung)
- 38: Leiterstelle (halbe Spannung)
- 39: Eingangssignal (Fig. 7)
- 40: elektronischer Auswerter
- 41: obere Grenze für 43
- 42: untere Grenze für 43
- 43: Ausgangssignal (Fig. 8)
- (1): Signalanfall gemäß Fig. 5
- (2): Signalanfall gemäß Fig. 6
- (3): Signalanfall gemäß Fig. 7
- (4): Signalanfall gemäß Fig. 8
- C1: Hochpaßkondensator
- C2: gepolter Kondensator
- C3: Siebtransformator
- C6: Kondensator
- C7: Kondensator
- C9: Kondensator
- C10: Kondensator
- C11: Kondensator
- C13: Kondensator
- C15: Kondensator
- C20: Kondensator
- C21: Kondensator
- R1: Spannungsteiler-Widerstand
- R2: Spannungsteiler-Widerstand
- R3: Spannungsteiler-Widerstand
- R4: Spannungsteiler-Widerstand
- R7: Widerstand
- R9: Widerstand
- R11: Widerstand
- R13: Widerstand
- R17: Widerstand
- tO: Beginn von 43
- tx: Ende von 43
- t: Signallänge von 43
- V3: Zenerdiode
- V7: Schutzdiode
- V9: Schutzdiode
- V12: Zenerdiode
- V13: Zenerdiode
- OP1: Operationsverstärker
- OP3: Operationsverstärker
- OP5: Operationsverstärker

## Patentansprüche

1. Vorrichtung zur Steuerung der Wischarbeit eines Scheibenwischers bei einem Fahrzeug, insbesondere einem Kraftfahrzeug, durch einen auf die Regenintensität ansprechenden Regensensor (10), der als piezo-elektrischer Geber ausgebildet ist und dem Eingang eines elektrischen Auswerters (40) vorgeschaltet ist, während der Ausgang des Auswerters (40) mit dem Wischerantrieb in Verbindung steht, und wobei der Regensensor (10)
aus mindestens zwei voneinander elektrisch getrennten Piezoelementen (11, 11') besteht, wobei
der Auswerter (40) die beidseitig (32, 32') anfallenden Meßsignale zunächst unabhängig auswertet, aber die in den beiden Meßzweigen (32, 32') erlangten Werte (43) miteinander vergleicht und entsprechend dem Vergleichsergebnis auf den Wischerantrieb einwirkt, und wobei der Auswerter (40) nur dann auf den Wischerantrieb einwirkt, wenn nur an einem der beiden Piezoelementen (11, 11') ein Meßsignal anfällt, während an beiden Piezoelementen (11, 11') übereinstimmend anfallende Meßsignale ignoriert werden, dadurch gekennzeichnet, daß die beiden Piezoelemente aus den beiden Hälften (11,11') eines gemeinsam hergestellten Piezokristalls (10) erzeugt sind, und
daß der Auswerter (40) bei übereinstimmenden, an beiden Piezoelementen (11, 11') anfallenden Meßsignalen feststellt, welches der beiden Piezoelemente (11) oder (11') das jeweils meßsignalmäßig unempfindlichere ist und in der nachfolgenden Meßphase nur die von letzterem (11 bzw. 11') ausgehenden Meßsignale zur Steuerung des Wischerantriebs berücksichtigt.

2. Vorrichtung nach Anspruch 1, dadurch gekennzeichnet, daß nur das eine der beiden Piezoelemente (11 bzw. 11') der Witterung ausgesetzt ist, während das andere demgegenüber verdeckt angeordnet ist, und der Auswerter (40) nur dann auf den Wischerantrieb einwirkt, wenn nur an dem der Witterung ausgesetzten Piezoelement (11 bzw. 11') ein Meßsignal anfällt.

3. Vorrichtung nach Anspruch 1 oder 2, dadurch gekennzeichnet, daß der Auswerter (40) die jeweils vorliegende Fahrzeuggeschwindigkeit beim Auswerten der Meßsignale (43) mitberücksichtigt.

4. Vorrichtung nach einem oder mehreren der Ansprüche 1 bis 3, dadurch gekennzeichnet, daß ein auf die äußere Witterung ansprechender Feuchtesensor vorgesehen ist, der die Vorrichtung erst dann wirksam setzt, wenn er Feuchtigkeit feststellt.

5. Vorrichtung nach einem oder mehreren der Ansprüche 1 bis 4, dadurch gekennzeichnet, daß die beiden Piezoelemente (11, 11') im Bereich eines Fahrzeug-Außenspiegels (19) angeordnet sind.

6. Vorrichtung nach einem oder mehreren der Ansprüche 1 bis 4, dadurch gekennzeichnet, daß die beiden Piezoelemente (11, 11') im Bereich des Kühlers eines Kraftfahrzeugs angeordnet sind.

7. Vorrichtung nach einem oder mehreren der Ansprüche 1 bis 6, dadurch gekennzeichnet, daß die Piezoelemente (11, 11') eine dem Scheibenverlauf angepaßte Neigungslage aufweisen.

8. Vorrichtung nach einem oder mehreren der Ansprüche 1 bis 7, dadurch gekennzeichnet, daß beide Piezoelemente (11, 11') auf einer gemeinsamen Grundplatte (13) montiert sind und auf der Außenseite eines Gehäuses (20) frei liegen, welches wenigstens einige elektronische Bauelemente (31) des Auswerters (40) beinhaltet.

9. Vorrichtung nach Anspruch 8, dadurch gekennzeichnet, daß eine die elektronischen Bauelemente (31) tragende Leiterplatte (30) Bestandteil des Gehäuses (20) ist und vorzugsweise auf der Innenseite einer außenseitig die Piezoelemente (11, 11') halterden Gehäusewand (22) angeordnet ist.

10. Vorrichtung nach einem oder mehreren der Ansprüche 1 bis 9, dadurch gekennzeichnet, daß die Piezoelemente (11, 11') in Abstand zueinander auf einer gemeinsamen Grundplatte (13) angeordnet sind.

11. Vorrichtung nach Anspruch 10, dadurch gekennzeichnet, daß ein Vorprodukt, bestehend aus den an einer Grundplatte (13) montierten Piezoelementen (11, 11'), die mit Kontaktanschlüssen (14, 14', 15) versehen sind, als ganzes tauchlackiert ist.

## Claims

1. A device for controlling the wiper performance of a windscreen wiper in a vehicle, more particularly a motor vehicle, by means of a rain sensor (10), which responds to the rain intensity, is constructed as a piezo-electric transmitter and is connected upstream of the input of an electrical evaluator (40), whereas the output of the evaluator (40) is connected to the wiper drive, and the rain sensor (10) comprising at least two piezo-electric elements (11, 11') which are separated from one another electrically, the evaluator (40) firstly evaluating independently the measurement signals received on both sides (32, 32'), but comparing the values (43) derived from the two measurement branches (32, 32') with one another and acting according to the comparison result upon the wiper drive, and the evaluator (40) only acting upon the wiper drive when a measurement signal is transmitted by only one of the two piezo elements (11, 11'), whereas corresponding measurement signals transmitted by both piezo elements (11, 11') are ignored, characterised in that the two piezo elements are formed by the two halves (11, 11') of a piezo crystal (10) manufactured as a whole, and when corresponding measurement signals are transmitted by both piezo elements (11, 11'), the evaluator (40) determines which of the two piezo elements (11) or (11') is less sensitive in respect of the measurement signal and in the subsequent measurement phase only takes into account the measurement signal transmitted by said piezo element (11) or (11') for controlling the wiper drive.

2. A device according to claim 1, characterised in that only one of the two piezo elements (11, 11') is exposed to the weather, whereas the other is covered relative to the weather, and the evaluator (40) only acts upon the wiper drive when a measurement signal is received from the piezo element (11 or 11') which is exposed to the weather.

3. A device according to claim 1 or 2, characterised in that the evaluator (40) also takes into account the respective vehicle velocity when evaluating the measurement signals (43).

4. A device according to one or more of claims 1 to 3, characterised in that a moisture sensor is provided, which responds to the external weather conditions and only actuates the device when it detects moisture.

5. A device according to one or more of claims 1 to 4, characterised in that the two piezo elements (11, 11') are arranged in the region of an external vehicle mirror (19).

6. A device according to one or more of claims 1 to 4, characterised in that the two piezo elements (11, 11') are arranged in the region of the radiator of a motor vehicle.

7. A device according to one or more of claims 1 to 6, characterised in that the piezo elements (11, 11') are arranged with an incline corresponding to the curve of the windscreen.

8. A device according to one or more of claims 1 to 7, characterised in that both piezo elements (11, 11') are mounted on a common base plate (13) and are exposed on the outside of a housing (20), which also houses at least some electronic components (31) of the evaluator (40).

9. A device according to claim 8, characterised in that a circuit board (30) supporting the electronic components (31) is a component part of the housing (20) and is preferably arranged on the inside of a housing wall (22), to the outside of which the piezo elements (11, 11') are secured.

10. A device according to one or more of claims 1 to 9, characterised in that the piezo elements (11, 11') are arranged spaced apart on a common base plate (13).

11. A device according to claim 10, characterised in that a preliminary product, comprising the piezo elements (11, 11') which are mounted on a base plate (13) and are provided with contact terminals (14, 14', 15), is immersion-varnished in its entirety.

## Revendications

1. Dispositif pour la commande du travail d'essuyage d'un essuie-glace de pare-brise d'un véhicule, notamment d'un véhicule automobile, au moyen d'un détecteur de pluie (10) sensible à l'intensité de la pluie, qui est constitué par un détecteur piézoélectrique et qui est monté en amont de l'entrée d'un évaluateur électrique (40), alors que la sortie de l'évaluateur (40) est en liaison avec l'entraînement de l'essuie-glace, et le détecteur de pluie (10) est constitué par au moins deux éléments piézoélectriques (11, 11') électriquement séparés l'un de l'autre,
l'évaluateur (40) évaluant d'abord de façon indépendante les signaux de mesure provenant des deux côtés (32, 32'), mais comparant l'une à l'autre les valeurs (43) parvenues dans les deux branches de mesure (32, 32') et agissant en fonction du résultat de la comparaison sur l'entraînement de l'essuie-glace, et l'évaluateur (40) n'agissant ensuite sur l'entraînement de l'essuie-glace que lorsqu'un signal de mesure apparaît sur l'un des deux éléments piézoélectriques (11, 11') alors que les signaux de mesure qui parviennent sur les deux éléments piézoélectriques (11, 11') et qui sont concordants sont ignorés,
caractérisé en ce que les deux éléments piézoélectriques sont réalisés à partir de deux moitiés (11, 11') d'un cristal piézoélectrique (10) réalisé d'un seul tenant, et
en ce que l'évaluateur (40) détermine, quand des signaux de mesure concordants apparaissent sur les deux éléments piézoélectriques (11, 11'), celui (11) ou (11') des deux éléments piézoélectriques qui est respectivement le plus insensible en ce qui concerne les signaux de mesure et au cours de la phase de mesure suivante ne tient compte que des signaux de mesure provenant de ce dernier (11 ou 11') pour la commande de l'entraînement de l'essuie-glace.

2. Dispositif selon la revendication 1, caractérisé en ce que l'un seulement des deux éléments piézoélectriques (11, 11') est exposé aux conditions atmosphériques alors que l'autre est monté de façon protégée et l'évaluateur (40) n'agit sur l'entraînement de l'essuie-glace que lorsqu'un signal de mesure apparaît seulement sur l'élément piézoélectrique (11 ou 11') qui est exposé aux conditions atmosphériques.

3. Dispositif selon la revendication 1 ou 2, caractérisé en ce que l'évaluateur (40) tient compte de la vitesse du véhicule pour l'évaluation des signaux de mesure (43).

4. Dispositif selon l'une ou plusieurs des revendications 1 à 3, caractérisé en ce qu'il est prévu un détecteur d'humidité qui est sensible aux conditions atmosphériques extérieures, qui ne met en marche le dispositif que s'il constate qu'il existe de l'humidité.

5. Dispositif selon l'une ou plusieurs des revendications 1 à 4, caractérisé en ce que les deux éléments piézoélectriques (11, 11') sont montés dans la région d'un rétroviseur extérieur (19) du véhicule.

6. Dispositif selon l'une ou plusieurs des revendications 1 à 4, caractérisé en ce que les deux éléments piézoélectriques (11, 11') sont montés dans la région du dispositif de refroidissement d'un véhicule automobile.

7. Dispositif selon l'une ou plusieurs des revendications 1 à 6, caractérisé en ce que les éléments piézoélectriques (11, 11') sont disposés dans une position inclinée qui est conforme à celle du parebrise.

8. Dispositif selon l'une ou plusieurs des revendications 1 à 7, caractérisé en ce que les deux éléments piézoélectriques (11, 11') sont montés sur une plaque de base commune (13) et sont exposés librement sur le côté extérieur d'un boîtier (20) qui contient au moins quelques composants électroniques (31) de l'évaluateur (40).

9. Dispositif selon la revendication 8, caractérisé en ce qu'une plaquette à circuits imprimés qui supporte les composants électroniques (31) constitue un élément composant du boîtier (20) et est disposée de préférence sur le côté interne d'une paroi (22) du boîtier qui contient les éléments piézoélectriques (11, 11') sur son côté externe.

10. Dispositif selon l'une ou plusieurs des revendications 1 à 9, caractérisé en ce que les éléments piézoélectriques (11, 11') sont disposés à distance l'un de l'autre sur une plaque de base commune (13).

11. Dispositif selon la revendication 10, caractérisé en ce qu'une ébauche constituée par les éléments piézoélectriques (11, 11') montés sur une plaque de base (13) et qui est munie de raccords de contacts (14, 14', 15) est vernie dans son ensemble par immersion.
